# EUROPEAN PATENT APPLICATION

(11) **EP 2 148 389 A1**
(43) Date of publication of application: **27.01.2010**
(21) Application number: 08161213.7
(22) Date of filing: 25.07.2008
(51) Int. Cl.: H01Q 15/00, H01Q 19/19

(54) **Apparatus for an antenna system**

(71) Applicant: Astrium Limited, Gunnels Wood Road Stevenage, Hertfordshire, SG1 2AS (GB)
(72) Inventor: Maxwell-Cox, Graham, Havant, Hampshire PO9 2RG (GB)
(74) Representative: Johansson, Anna Olivia

(57) **Abstract**

An apparatus for an antenna system comprising means for cutting the energy in the electric field received by an antenna into a plurality of portions and redirecting said plurality of portions for detection by a plurality of detectors. The means for cutting the energy in the electric field may comprise a plurality of blades for cutting the energy into successively smaller and smaller portions. The plurality of detectors can be positioned outside the focal region of the antenna system. If the dimensions of the detectors are required to be relatively large, the system can then detect more closely packed beams than if the detectors had been positioned in the focal region. The apparatus may further comprise focusing means for focusing the cut energy onto another blade or a detector. There is also provided an antenna system comprising a plurality of feed horns for producing a plurality of beams; and a plurality of elements for redirecting said beams towards a focal region of the antenna system so as to form a group of closely packed beams for transmission by the antenna system.

## Description

### Field of the Invention

The invention relates to an apparatus for redirecting portions of energy received in an antenna or beams produced by the antenna. More particularly, but not exclusively, it relates to an apparatus for cutting the electric field received in an antenna system into a plurality of portions of energy and redirecting the portions to allow them to be detected away from the focal region of the antenna system.

### Background of the Invention

In conventional reflector antenna systems, the narrow patterns in the farfield of the reflector are brought to a focus where a single feed horn or a group of feed horns are placed to capture or sample the reflected energy from the system. To sample the field in different positions, the feed horn or group of feed horns can be moved in the focal plane of the antenna system so as to scan the antenna beams. The beam positions in the far-field move in a nominally linear relation to the feed position shift (for small angles).

To improve data acquisition time and instrument sensitivity, it is preferred to have a stationary array of feed horns in the focal plane instead of one or more moving feed horns. Unfortunately, the amount of information obtained is limited by the closeness of the beams scanned, which in turn is limited by the dimensions of the feed horn. For telecommunication applications, the dimensions of the feed horns are relatively small (1 to 2 wavelengths in diameter) and closely packed beams can be sampled. However, for radiometry applications, the requirements on the feed to produce Gaussian like beams with low sidelobes from the farfield lead to the use of feed horns that have much larger diameter (6 to 10 wavelengths). When the horns are placed next to each other, the sampled beams are not packed closely enough. For example, in some sub-mm wave applications, it is desired to sample beams spaced apart by 3mm. However, the width of the feed horns has to be 10mm, making it impossible to place the feed horns 3mm apart.

Additionally, each feed horn is provided with signal processing components such as Low Noise Amplifiers (LNAs) and mixers. These components may not be small enough to allow the feed horns to be placed closely enough together to sample beams that are packed closely enough.

The invention aims to address these issues.

### Summary of the Invention

According to the invention, there is provided an apparatus for an antenna system comprising: means for cutting the energy of an electric field received by an antenna into a plurality of portions and redirecting said plurality of portions for detection by a plurality of detectors.

The means for cutting the energy in the electric field may comprise a plurality of blades for cutting the energy in the electric field into successively smaller and smaller portions.

The invention therefore allows the feed horns to be located away from the focal region. Consequently, feed horns, large enough to produce the required beams, can be used to sample closely packed beams.

The means for cutting the energy in the electric field may comprise a prism blade. The means for cutting the energy in the electric field may also comprise a reflecting blade. The reflective blade may comprise two reflective surfaces joined at an angle.

The two reflective surfaces may be shaped to focus one of the plurality of portions of energy towards a detector. Alternatively, the means for cutting the energy in the electric field may comprise at least two blades, one of the blades comprising said two reflective surfaces and said two reflective surfaces being shaped to focus one of the plurality of portions of energy towards the other blade. The two reflective surfaces may comprise cylindrical mirrors.

The means for cutting the energy in the electric field may comprise at least two blades, and the apparatus may further comprise focusing means for focusing one of the plurality of portions of energy from one of the blades onto the other blade. Alternatively or additionally, the apparatus may further comprise focusing means for focusing one of the plurality of portions of energy onto a detector. The means for focusing the plurality of portions of energy may be configured to reshape the plurality of portions of energy into circular beams. The means for focusing the redirected plurality of portions of energy may comprise a mirror and/or a lens.

In one embodiment, the means for cutting the energy in the electric field may comprise a plurality of metallic reflecting blades, the means for focusing may comprise a plurality of metallic reflecting mirrors and the plurality of blades and plurality of mirrors may be cut from a single block of metal. Manufacturing the apparatus as a single unit, or as a few separate units, reduces the number of components required to cut and detect the field and makes the design more mechanically stable.

According to the invention, there is also provided a device comprising a plurality of layers, each layer comprising an apparatus according to any one of the claims and an aperture for receiving radiation, the device further comprising means for dividing incoming radiation into a plurality of portions based on at least one parameter of the radiation and redirecting each portions of the plurality of portions of radiation into a separate layer through said apertures.

The at least one parameter may comprise the polarisation of the radiation. The at least one parameter may also comprise the frequency of the radiation.

According to the invention, there is also provided an antenna system comprising the apparatus recited above and a plurality of feed horns for receiving the redirected portions of energy.

Additionally, according to the invention, there is provided an antenna system comprising: a plurality of feed horns for producing a plurality of beams; and a plurality of elements for redirecting said beams towards a focal region of the antenna system so as to form a group of closely packed beams for transmission by the antenna system.

The plurality of elements may comprise an element arranged to reflect or refract a plurality of incident beams to produce a set of adjacent beams. The antenna system may further comprise a focusing element for focusing the set of adjacent beams onto another element of the plurality of elements.

The plurality of elements may comprise a plurality of reflective blades or prism blades.

### Brief Description of the Drawings

Embodiments of the invention will now be described, by way of example, with reference to the accompanying drawings, in which:
Figure 1 is a schematic diagram of an antenna system comprising a beam cutter according to one embodiment of the invention;
Figure 2 shows the beam cutter of Figure 1 in more detail;
Figure 3 illustrates a variant of an element of the beam cutter;
Figure 4 illustrates a variant of another element of the beam cutter.
Figure 5 shows part of a beam cutter according to another embodiment of the invention.
Figure 6 shows a beam cutter according to yet another embodiment of the invention;
Figure 7 shows a side view of the beam cutter of Figure 6;
Figure 8 illustrates how the beam cutters can be stacked.

### Detailed Description

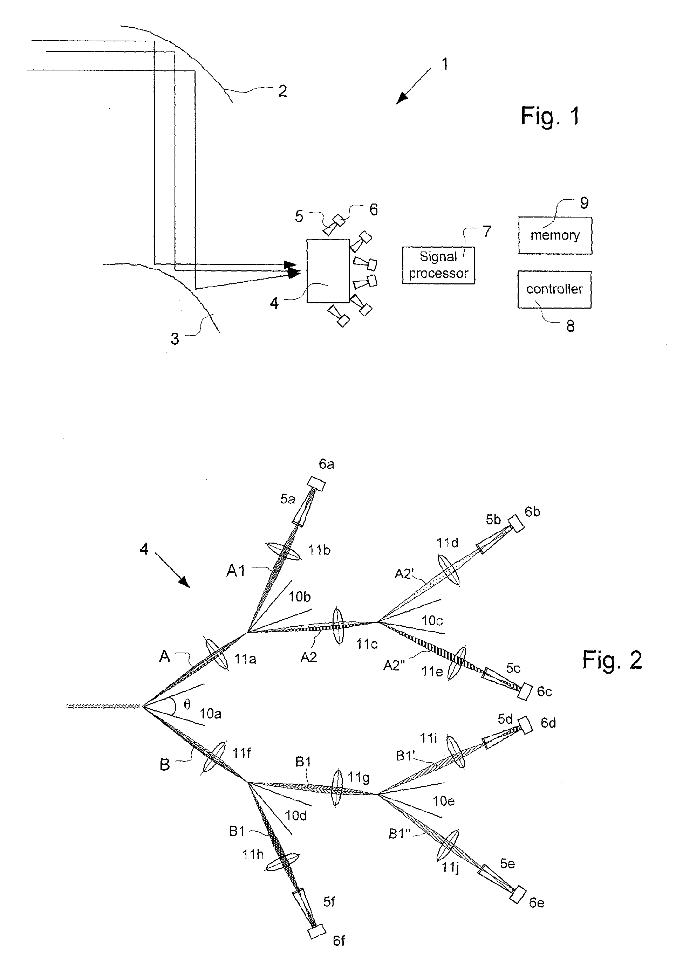

With reference to Figure 1, a reflector antenna system comprises a main reflector 2 and a subreflector 3 for receiving and focusing incoming radiation, a beam cutter 4 for splitting the nearfield at the focal region of the system, a plurality of feed horns 5 with associated processing units 6, a signal processor 7, a controller 8 and a memory 9. The reflector antenna system may be used in, for example, radiometry, radio astronomy or Earth remote sensing. In such applications, the incoming radiation is typically sub-mm or microwave radiation. The frequency of the radiation may be, but is not limited to, between 50GHz and a 3 THz. The reflector antenna system could also be used in a telecommunication system.

The main reflector 2 may be a concave parabolic reflector and the subreflector 3 may be a convex hyperbolic reflector with two foci. Other reflector shapes, to focus the incoming energy, are of course also possible. The main reflector 2 reflects all incoming rays or energy parallel to its axis of symmetry to its focus which is also one of two foci of the subreflector 3. The subreflector 3 subsequently reflects the rays or energy from the main reflector to its second focus, where the beam cutter 4 is located.

The beam cutter 4 is a quasi-optical device that splits the incoming radiation into a plurality of portions and redirects the energy to positions where suitable feed horns 5 are placed to form the required scanned beams. The beam cutter therefore replaces a linear array of horns in the focal region for producing scanned radiation patterns in the farfield of the reflector. It should be noted that, generally, until a feed horn is placed in the focal region of the subreflector, there exist no beams in the farfield of the antenna. Instead, a nearfield exists at the focus, with potential to form beams. The invention uses a beam cutter to sample this field rather than using horns placed there.

The horns 5 have a fairly large diameter in order to produce the required Gaussian like beams with low sidelobes. The diameter may be of the order of 6 to 10 wavelengths, which for a signal of frequency of 250GHz can mean a diameter of 10mm. The horns may be corrugated or Potter stepped horns. Each feed horn has an associated processing unit 6 comprising, for example, a low noise amplifier (LNA) that amplifies the signal and a mixer that downconverts the high frequency signal to a lower frequency. The converted signals are fed to a central signal processor 7 for further signal processing. It should be realised that although the central signal processor 7 is shown in Figure 1 as a single component, it may comprise a plurality of separate components. The controller 8 controls the reception and storage of data in the memory 9. The reflector antenna system 1 may also comprise a transmit antenna for transmitting the received data to a ground station. Additionally, it may comprise another receive antenna system for receiving instructions from the ground station.

One embodiment of the beam cutter 4 according to the invention is shown in more detail in Figure 2. The beam cutter 4 of Figure 2 splits the energy in the electric field received by the antenna into six different beams to be detected by six different feed horns 5a-5f. The beam cutter has a plurality of field cutting elements for successively cutting the nearfield into smaller and smaller slices. The beam cutter 4 also has a plurality of focusing elements for focusing the energy in the field after the field has been cut. The field cutting elements and the focusing elements are assembled in the same plane. All the elements of the beam cutter may be located in a housing. It should be realised that the field cutting elements do not divide the field into two copies of the same information but divide the field into two slices of different information. As an analogy, two halves of the same image can be considered.

In Figure 2, the field cutting elements are provided in the form of reflective blades 10a-10f and the focusing elements are provided in the form of lenses 11a-11j. The first reflective blade 10a is located in the focal region of the system, where the potential farfield beams are concentrated into a small region. It splits the nearfield into two portions A, B. The first portion A is refocused by a first field lens 11a and then split by a second blade 10b into portions A1 and A2. One of the portions A1 is refocused by a second field lens 11b and detected by horn 5a. The other portion is further split by a blade 10c into two portions A2' and A2" which are refocused by respective field lenses 11d and 11e and detected by respective horns 5b and 5c. Similarly, the second portion of the nearfield B is refocused by field lens 11f and split by a fourth blade 10d into two portions B1 and B2. One of the portions B1 is refocused and further split by blade 10e into two portions B1' and B1" which are refocused by field lenses 11h and 11i and detected by horns 5d and 5e. The other portions B2 are refocused by lens 11j and detected by horn 5f without being divided further.

Each blade 10a to 10e consists of two reflective surfaces, such as two mirrors, joined along an edge facing the radiation. The radiation is focused on, slightly in front of or beyond the edge. The reflective surfaces are provided by a radio frequency conducting material. For example, the blade may be made from metal, including but not limited to aluminium. In more detail, the blade may be made from a bent sheet of metal or a solid block of metal. The surfaces may, for example, be polished, silver-coated or gold-coated. The blades could also be made of plastic, or any other suitable material, and have a reflective coating.

The leading edge of the blade is sharp in order not to produce excessive diffraction and spoil the beams. As an example, the edge may be around a hundredth of a wavelength or approximately 0.01mm. The angle θ between the two reflecting surfaces of the blade may be between 10 and 45 degrees. However, the exact angle depends on the application. The angle may also be larger than 45 degrees if suitable. In a sub-mm-wave application, the length of each reflecting surface of the blade may be of the order to 20mm. The blades are angled such that the reflected or refracted energy is directed conveniently to the next blade or focusing element. The blades do not necessarily have to cut the field in two equal portions. For example, blades 10b and 10d may cut the field such that slices A1 and B2 contain the same proportion of the original field as slices A2', A2", B1' and B1".

The lenses may be made of plastic, for example polytetrafluoroethylene (PTFE). The lenses may also be made out of glass. In one embodiment, the lenses may have a hyperbolic shape with concentric grooves to improve the efficiency with which the field is let through the lens. The lenses refocus the energy to a region about the tip of the next blade or the focal region of a feed horn. The focal region of a feed horn generally lies inside the horn, slightly beyond the aperture of the feed horn. It should be understood that it is not always necessary to refocus the field before cutting it again or before it is detected by a feed horn. Whether a lens is placed between two blades or between a blade and a feed horn depends on the specific design of the beam cutter.

Due to beam efficiency considerations, the feed horns 5a to 5f would typically be chosen to be cylindrical horns to produce circular beams. However, it should be noted that it is also possible to have elliptical aperture corrugated horns or rectangular horns that produced elliptical beams. The cutting of the field changes the shape of the beams into a more elliptical shape. This is because the electric field comprises components that are extended in angle and, when you cut the field, there is some loss of the higher angular components that are blocked by the presence of the blade. The quality of the pattern in the farfield formed for the very closest beams therefore degrades with proximity to the blade. Some of these beams therefore need reshaping to match better the cylindrical horns. By using suitable shaped lenses, such as anamorphic lenses, the beams can be reshaped and the quality improved.

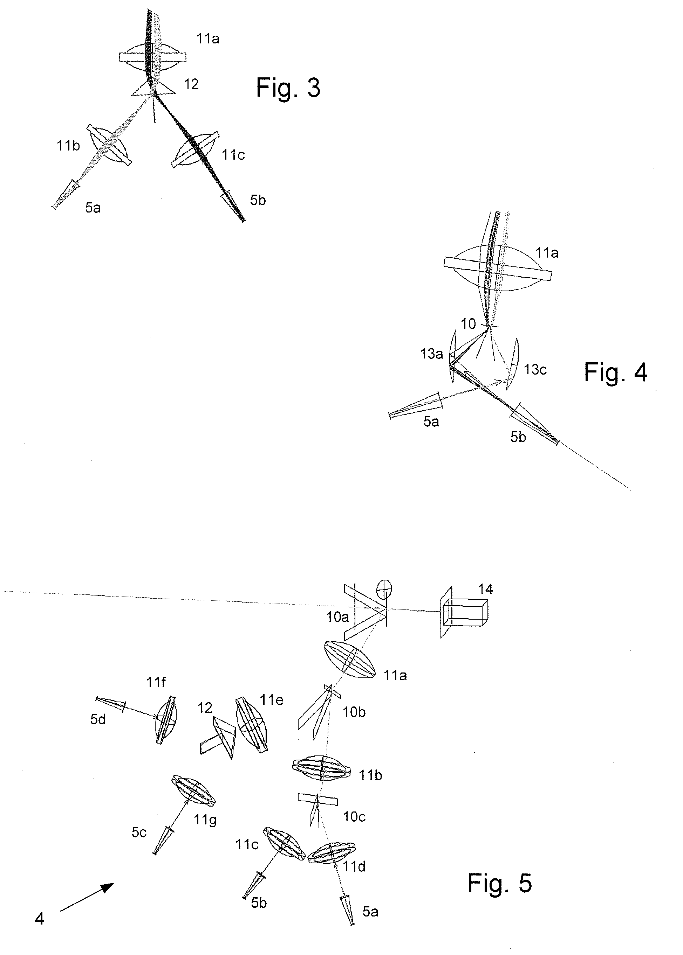

With reference to Figure 3, an alternative to the reflective blades in Figure 2 for the field cutting elements are shown. In this case, the field cutting element is created using a prism blade 12. When using a prism, the separation of the beams is carried out by refraction rather than by reflection. The light is focused by a lens 11a onto the prism blade 12 and refracted into two beams. As shown in Figure 3, the beams cross over in the prism. Each of the two beams is refocused by a respective lens 11b, 11c into respective horns 5a, 5b. Internal reflection may occur in the prism and a metal foil (not shown) may be included down the centre line of the prism to provide isolation between the beams. Again, the angle of the surfaces of the prism facing the incident radiation may be between 10 and 45 degrees. However, the exact angle depends on the application. The angle may also be larger than 45 degrees if suitable.

With reference to Figure 4, an alternative to the lenses in Figure 2 for the focusing elements is shown. In this embodiment, the focusing elements are provided by mirrors 13 instead of field lenses. The energy is focused by a lens 11a onto a blade 10 and refracted into two beams. Each beam is then reflected by a respective mirror 13a, 13b towards a horn 5a, 5b. As shown, when using mirrors, the beams cross over when feeding into the horns. The mirrors may be made from, but is not limited to, metal, such as polished aluminium.

In some embodiments of the beam cutter, the field cutting element and the focusing element may be combined as a single element. Instead of the field cutting element being formed from two plain mirrors joined along an edge, the two mirrors may be shaped mirrors. The curvature of the mirrors along the joining edge may be small so as to keep a roughly uniform thickness along the edge and thereby reduce diffraction at the joining edge. The field cutting element would refocus the split energy and control the beam waist of the resulting beam. Consequently, the field cutting element would both split the field and refocus the energy. The shaped mirrors may for example be cylindrical mirrors joined along a sharp edge along a line parallel to the cylinder axis of each of the mirrors. Such a blade would refocus the beam in one plane. The shaped mirrors may also have a shape corresponding to any other conic section, such as an elliptical or hyperbolic shape, or an arbitrary shape chosen for optimising the pattern.

It should be realised that a combination of reflective blades 10, prisms 13, lenses 11 and mirrors 13 may be used to form the beam cutter 4. In Figure 5, one half of a beam cutter 4 that produces 8 slices of the nearfield is shown. The beam cutter comprises both a prism blade 12 and a reflective blade 10 for cutting the field. The path of a single ray through the beam cutter 4 is shown. The incoming energy is reflected by a mirror 14 onto a first reflective blade 10a that carries out the first level division of the field. The second level division is performed with another reflective blade 10b, creating two groups of two beams. The first pair of beams is subdivided with a further reflective blade 10c while the remaining beams are divided with a prism blade 12. The resulting beams are refocused to be received by feed horns 5a to 5d. Between each of the divisions the fields are refocused to next blade or horn by means of simple field lenses 11a-11g. It should be understood that mirrors may be used instead of the lenses.

The processing units 6, comprising for example amplifiers and mixers, are not shown in Figures 3, 4 and 5 for the sake of clarity. However, it should be realised that each feed horn can be connected to various signal processing components. Moreover, it should be realised that the lines and planes shown near the blades in Figures 3 to 5, perpendicular to the incident radiation for the reflective blades and parallel to the incident radiation for the refractive blades, are schematic field lines and not part of the blades.

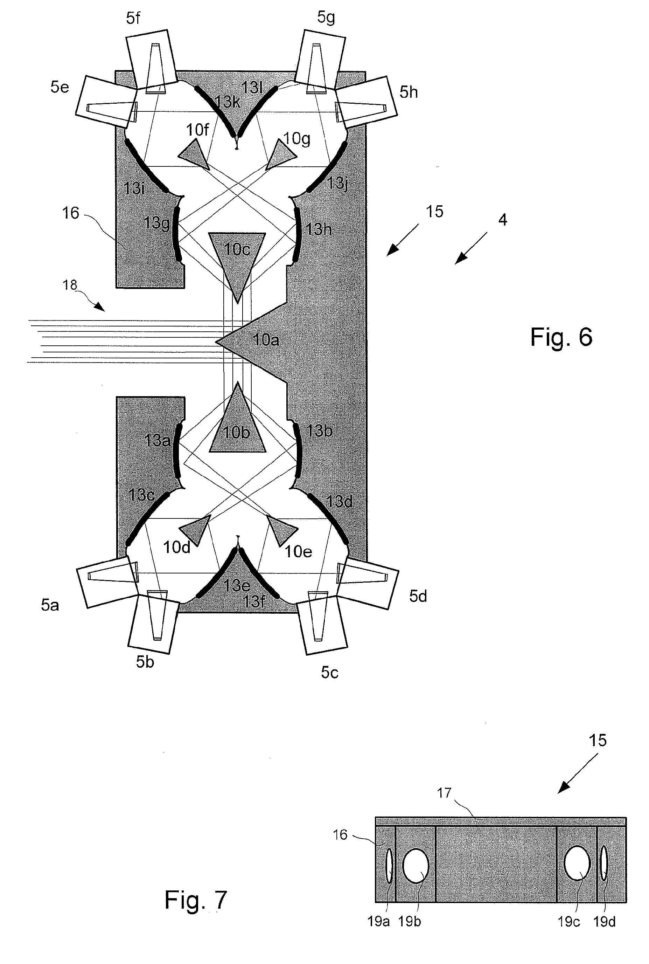

Figures 6 and 7 illustrate an embodiment of the beam cutter 4 wherein the focusing elements are provided by offset metallic mirrors and the field cutting elements are provided by metallic blades. By selecting metallic mirrors and metallic blades, the beam cutter, or at least most of the components of the beam cutter, can be made entirely out of metal. In the embodiment of Figures 6 and 7, the beam cutter 4 is provided as a single unit 15 shaped from a single machined block of metal 16 and fitted with a lid 17. As an alternative, the beam cutter 4 may be constructed from a plurality of components forming an assembly as if cut from a single block of metal. The unit may have slots for receiving any separate components such as, for example, any required plastic lenses or anamorphic mirrors manufactured separately. The design is compact, has its components in a single plane, and provides plenty of room for the feed horns and their associated detector components, for example, the mixer blocks and Low Noise Amplifiers 6.

As shown in Figure 6, the radiation is received through an aperture 18 in the block to a focus in a region 3 to 5mm inside the block. A first level blade 10a is provided in the focus region to split the radiation into two portions. A pair of second level blades 10b, 10c is provided to cut each of the two portions into two slices to form two sets of two slices. No separate mirrors are used between the first level and the second level blades in this embodiment. The reflective surfaces of the first level blade may be plain mirrors or they may be cylindrical mirrors that also refocus the energy towards the second blade. The walls of the inside of the block are machine shaped and polished to act as mirrors for reflecting and refocusing the field towards another blade or a feed horn. The walls may also be silver or gold plated. The two sets of two slices are reflected onto third level blades 10d-10g that split the radiation into eight slices, which in turn are detected by horns.

Figure 7 shows the beam cutter block 15 from the side without the feed horns. Along the side of the beam cutter, holes 19a-19d for receiving the feed horns 5a-5d of Figure 6 are located. In one embodiment, the height of the block including the lid is approximately 20mm.

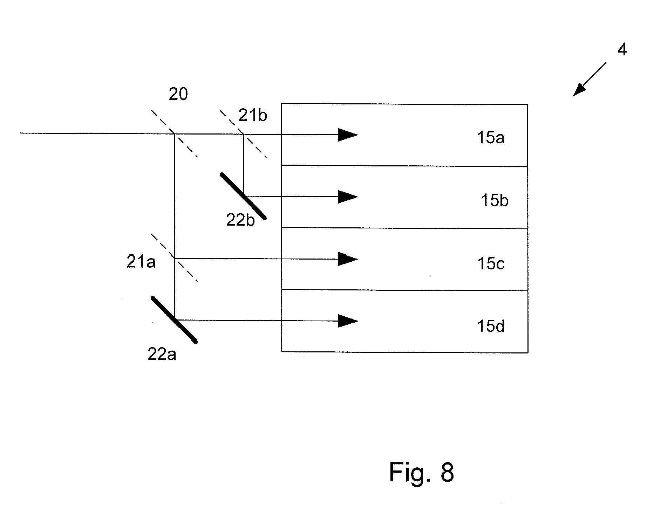

Two or more of the blocks 15 shown in Figures 6 and 7 can be stacked to provide dual linear polarisation and extra bands of operations. A schematic diagram of a four block beam cutter unit is shown in Figure 8. In the focus region of the antenna system a polarising plate 20 is provided for separating the nearfield into two different polarisations. Each portion of the nearfield energy is then split by, for example, a frequency selective surface (FSS) or a dichroic filter 21a, 21b into two different frequencies providing two groups of two field portions. The resultant field portions are then focused, using mirrors 22a, 22b if necessary, onto the first blade of each block, 15a-15d, and then divided and redirected to the feed horns (not shown in Figure 8). If each block produces 8 beams, the unit would produce a staring array of 8 beams with co-registered beams in frequency and polarisation. Of course, additional frequency selective surfaces can be provided to divide the field into smaller frequency bins. It should be realised that divisions based on polarisation and frequency are only examples and divisions based on other characteristics of the radiation can also be considered.

It should also be realised that the blades and focusing elements could also be used in a transmit antenna to produce a collection of closely packed beams for transmission by the antenna. The beam cutter 4 would then provide a beam combiner instead. In a transmit antenna, the feed horns produce beams that are transmitted towards the cutting elements. Each of the cutting elements 10, 12 reflects or refracts a plurality of incident beams to produce a set of closely packed adjacent beams. The focusing elements 11, 13 refocus and reshape the set of closely packed beams. The cutting elements closest to the feed horns reflects or refracts two beams into a set of two adjacent beams, whereas the cutting elements further away from the feed horns reflects two sets of adjacent beams, or one set of adjacent beams and a single beam, into a new set of adjacent beams. The cutting elements are arranged such that at least two beams are incident on a cutting element from different directions but reflected, or refracted, in substantially the same direction. Such a system could, for example, be used in radar or telecommunication transmit systems in which closely packed beams are required. In the transmit system, the feed horns would be located outside the focal region but the blades, mirrors and lenses would redirect the beams from the feed horns to the focal region for transmission by the antenna system, thereby making it possible to produce more closely packed beams than if the feed horns had been located in the focal region. Depending on the arrangement of reflectors in the transmit antenna, the focal region would correspond to a focus of a single reflector or a focus of a subreflector.

The transmit antenna could have the same arrangement of components as described with respect to Figures 1 to 8 for a receive antenna but the direction of radiation would of course be the opposite to that described with respect to the Figures above. For example, with reference to Figure 2, the beams would be produced by feed horns 6a to 6f, focused by a lenses 11b, 11d, 11e, 11h, 11i and 11j and successively combined by blades 10a to 10j to form a set of closely packed beams. Then, with reference to Figure 1, the set of beams would be reflected by the sub reflector 3 towards the main reflector 2 and away from the antenna system 1.

Whilst specific examples of the invention have been described, the scope of the invention is defined by the appended claims and not limited to the examples. The invention could therefore be implemented in other ways, as would be appreciated by those skilled in the art.

For example, even though the beam cutter has been described to cut the nearfield of the antenna system, it should be understood that the electric field cut by the beam cutter is not limited to the nearfield of an antenna. The beam cutter could be used to cut any electric field. It could be possible for the electric field to be in the far-field of some component in the system and the beam cutter could then be used to split the farfield of that component. Moreover, although the antenna system of Figure 1 has been described to have a particular configuration of main and sub reflectors for receiving the incoming radiation or transmitting the outgoing radiation, the antenna system can have any suitable reflector arrangement.

## Claims

1. Apparatus for an antenna system comprising:
means for cutting the energy in the electric field received by an antenna into a plurality of portions and redirecting said plurality of portions for detection by a plurality of detectors.

2. Apparatus according to claim 1, wherein the means for cutting the energy in the electric field comprises a plurality of blades for cutting the field into successively smaller and smaller portions.

3. Apparatus according to any one of the preceding claims wherein the means for cutting the field comprises a prism blade.

4. Apparatus according to any one of the preceding claims, wherein the means for cutting the energy in the electric field comprises a reflecting blade.

5. Apparatus according to claim 4, wherein the reflective blade comprises two reflective surfaces joined at an angle.

6. Apparatus according to claim 5, wherein the two reflective surfaces are shaped to focus one of the plurality of portions of energy towards a detector or wherein the means for cutting the energy in the electric field comprises at least two blades, one of the blades comprising said two reflective surfaces and said two reflective surfaces being shaped to focus one of the plurality of portions of energy towards the other blade.

7. Apparatus according to any one of claims 1 to 5, further comprising means for focusing at least one of said plurality of portions of energy onto a detector or wherein the means for cutting the energy in the electric field comprises at least two blades, and the apparatus further comprising focusing means for focussing one of the plurality of portions of energy from one of the blades onto the other blade.

8. Apparatus of claim 3, wherein the means for focusing the plurality of portions of energy are configured to reshape the plurality of portions of energy into circular beams.

9. Apparatus according to any one of the preceding claims, wherein the means for focusing the plurality of portions of energy comprises at least one out of a mirror and a lens.

10. Apparatus according to any one of the preceding claims, wherein the means for cutting the energy in the electric field comprises a plurality of metallic reflecting blades and the means for focusing comprises a plurality of reflecting metallic mirrors and wherein the plurality of reflecting blades and reflecting plurality of mirrors are cut from a single block of metal.

11. A device comprising a plurality of layers, each layer comprising an apparatus according to any one of the claims and an aperture for receiving radiation, the device further comprising means for dividing incoming radiation based on at least one parameter of the radiation and redirecting the divided radiation into separate layers through said apertures.

12. An antenna system comprising the apparatus or device according to any one of the preceding claims and a plurality of feed horns for receiving the redirected and refocused portions of energy.

13. An antenna system comprising:
a plurality of feed horns for producing a plurality of beams; and
a plurality of elements for redirecting said beams towards a focal region of the antenna system so as to form a group of closely packed beams for transmission by the antenna system.

14. An antenna system according to claim 13, wherein the plurality of elements comprises an element arranged to reflect or refract a plurality of incident beams to produce a set of adjacent beams and the antenna system further comprises a focusing element for focusing the set of adjacent beams onto another element of the plurality of elements.

15. An antenna system according to claim 13 or 14, wherein the plurality of elements comprises a plurality of reflective blades or prism blades.
